# EUROPEAN PATENT APPLICATION

(11) **EP 4 099 663 A1**
(43) Date of publication of application: **07.12.2022**
(21) Application number: 22176205.7
(22) Date of filing: 30.05.2022
(51) Int. Cl.: H04L 67/131

(54) **METHOD AND DEVICE FOR OPERATING VIRTUAL SPACE**

(30) Priority: 31.05.2021 CN 202110603982
(71) Applicant: Beijing Dajia Internet Information Technology Co., Ltd., Beijing 100085 (CN)
(72) Inventor: TANG, Ye, Haidian District Beijing, 100085 (CN); ZHANG, Xiaobo, Haidian District Beijing, 100085 (CN)
(74) Representative: Vossius & Partner Patentanwälte Rechtsanwälte mbB

(57) **Abstract**

The present disclosure provides a method and device for operating a virtual space, which relates to the field of Internet technologies. A joint virtual space is displayed (S201) on a preset page if a first confirmation instruction for a joint operation between a first user account and a second user account is detected, and identity information of a first user and identity information of a second user are displayed (S203) on the preset page. The joint virtual space includes a viewer user account corresponding to the first user, a viewer user account corresponding to the second user, and an independent viewer user account.

## Description

### TECHNICAL FIELD

The present disclosure relates to the field of Internet technologies, and in particular, to a method and device for operating a virtual space, an electronic device and a storage medium.

### BACKGROUND

At present, mobile terminals are widely used for video on-demand and live video from Internet multimedia. With the continuous development of mobile Internet technology, the speed of mobile network has been significantly increased, and mobile videos are widely used by people in various scenarios. The mobile videos become more and more popular because of convenience and efficiency. In particular, people watch video on-demand/live video content in their spare time, even in their fragmented time of commuting, so that they can make full use of the fragmented time to watch video programs of interest.

At present, when a viewer is watching a live broadcasting room of a certain platform, there is usually only one anchor in the live broadcasting room, and the live broadcasting room is directly linked to the anchor. That is, currently, the live broadcasting room is centralized, and the quality of the live broadcasting room (including the quality of content output) is directly related to the ability and quality of the anchor.

### SUMMARY

The present disclosure provides a method and device for operating a virtual space, an electronic device and a storage medium.

According an aspect of the present disclosure, a method for operating a virtual space, performed by a first anchor terminal corresponding to a first user account includes:
displaying a joint virtual space on a preset page in response to a first confirmation instruction for a joint operation between the first user account and a second user account, wherein an account controlling the joint virtual space includes the first user account and the second user account; and
displaying identity information of a first user and identity information of a second user on the preset page,
wherein the joint virtual space includes a viewer user account corresponding to the first user, a viewer user account corresponding to the second user, and an independent viewer user account.

According to some embodiments of the present disclosure, the preset page includes a space sharing control for the virtual space, and the method further includes:
in response to a space sharing instruction triggered based on the space sharing control, generating space sharing information according to the first user account,
wherein the space sharing information is configured to guide an electronic device that launches the space sharing information to enter the joint virtual space.

According to some embodiments of the present disclosure, the joint virtual space includes a first sub-virtual space and a second sub-virtual space, the first sub-virtual space corresponds to the first user account, and the second sub-virtual space corresponds to the second user account, and
said displaying the joint virtual space on the preset page includes:
displaying at least the first sub-virtual space on the preset page.

According to some embodiments of the present disclosure, the space sharing information is configured to guide the electronic device that launches the space sharing information to display at least the first sub-virtual space on a preset page of the electronic device that launches the space sharing information.

According to some embodiments of the present disclosure, the method further includes:
displaying identity information of a third user on the preset page in response to second confirmation information for a joint operation between the first user account and a third user account or a joint operation between the second user account and the third user account,
wherein the account controlling the joint virtual space further includes the third user account.

According to some embodiments of the present disclosure, the method further includes:
displaying identity information of a fourth user on the preset page in response to third confirmation information for a joint operation between the third user account and a fourth user account,
wherein the account controlling the joint virtual space further includes the fourth user account.

According to some embodiments of the present disclosure, said displaying the joint virtual space on the preset page in response to the first confirmation instruction for the joint operation between the first user account and the second user account includes:
obtaining first permission information corresponding to the first user account and second permission information corresponding to the second user account in response to the first confirmation instruction for the joint operation between the first user account and the second user account; and
displaying the joint virtual space on the preset page in response to that the first permission information and the second permission information satisfy preset permission information.

According to another aspect of the present disclosure, a method for operating a virtual space, performed by a viewer terminal corresponding to a viewer user account, includes:
displaying space sharing information, wherein the space sharing information is generated according to a first user account that shares the space sharing information;
displaying a joint virtual space on a preset page in response to a display instruction, wherein the display instruction is based on the space sharing information, the joint virtual space is determined based on a first confirmation instruction for a joint operation between the first user account and a second user account, and an account controlling the joint virtual space includes the first user account and the second user account; and
displaying, on the preset page, identity information of a first user, identity information of a second user and a viewer identity corresponding to the first user account, wherein the viewer identity is displayed due to entering the joint virtual space.

According to some embodiments of the present disclosure, the joint virtual space includes a first sub-virtual space and a second sub-virtual space, the first sub-virtual space corresponds to the first user account, and the second sub-virtual space corresponds to the second user account, and
said displaying the joint virtual space on the preset page includes:
displaying at least the first sub-virtual space on the preset page.

According to some embodiments of the present disclosure, the method further includes:
determining recommendation information of a sub-virtual space in response to a space jumping instruction, wherein the recommendation information of the sub-virtual space includes first identity information of a to-be-recommended sub-virtual space;
obtaining second identity information of a sub-virtual space currently displayed on the preset page; and
displaying the to-be-recommended sub-virtual space on the preset page in response to that the first identity information and the second identity information are not matched.

According to some embodiments of the present disclosure, said determining the recommendation information of the sub-virtual space in response to the space jumping instruction includes:
triggering the space jumping instruction in response to detecting that a duration of displaying the sub-virtual space corresponding to the second identity information on the preset page reaches a preset duration; and
determining the recommendation information of the sub-virtual space.

According to some embodiments of the present disclosure, the preset page includes a space jumping control, and
said determining the recommendation information of the sub-virtual space in response to the space jumping instruction includes:
determining the recommendation information of the sub-virtual space in response to the space jumping instruction triggered based on the space jumping control.

According to some embodiments of the present disclosure, said determining the recommendation information of the sub-virtual space includes:
determining at least one of anchor output information and viewer interaction information of each sub-virtual space in the joint virtual space; and
determining the recommendation information of the sub-virtual space according to the at least one of the anchor output information and the viewer interaction information,
preferably,
determining the anchor output information of each sub-virtual space in the joint virtual space includes:
   determining language content output information and action content output information of each sub-virtual space in the joint virtual space;
   determining first time information corresponding to the language content output information;
   determining second time information corresponding to the action content output information; and
   determining the anchor output information of each sub-virtual space according to the language content output information, the action content output information, the first time information and the second time information.

According to some embodiments of the present disclosure, the preset page includes a viewer interaction control, and the method further includes:
displaying, in response to a viewer interaction instruction triggered based on the viewer interaction control, the viewer interaction information carried in the viewer interaction instruction on the preset page,
wherein the viewer interaction information includes agreement information of output content, output information of virtual resource, comment information of output content, and anchor-being-followed information,
preferably,
the output information of virtual resource includes directional output information of virtual resource and non-directional output information of virtual resource, and
the anchor output information of each sub-virtual space is configured to indicate allocation information of the non-directional output information of virtual resource for an anchor user account corresponding to each sub-virtual space.

According to yet another aspect of the present disclosure, according to yet another aspect of the present disclosure, an electronic device is configured to perform the method any one of the above embodiments.

In the present disclosure, a joint virtual space in which a plurality of users share responsibility may be established through a determination command for a joint operation, which may reduce waste of resources provided by a platform due to poor ability and quality of a single anchor, and at the same time, may increase the application diversity of virtual space.

It is to be understood that both the foregoing general description and the following detailed description are exemplary and explanatory only and are not intended to limit the present disclosure.

### BRIEF DESCRIPTION OF THE DRAWINGS

The accompanying drawings, which are incorporated into and constitute a part of the specification, illustrate embodiments consistent with the present disclosure, and together with the description, serve to explain the principle of the present disclosure and do not intend to limit the present disclosure.
FIG. 1 is a schematic diagram of an application environment according to an embodiment of the present disclosure;
FIG. 2 is a flowchart of a method for operating a virtual space according to an embodiment of the present disclosure;
FIG. 3 is a schematic diagram of a preset page according to an embodiment of the present disclosure;
FIG. 4 is a schematic diagram of a preset page according to an embodiment of the present disclosure;
FIG. 5 is a schematic diagram of a preset page according to an embodiment of the present disclosure;
FIG. 6 is a schematic diagram of a preset page according to an embodiment of the present disclosure;
FIG. 7 is a schematic diagram of a preset page according to an embodiment of the present disclosure;
FIG. 8 is a schematic diagram of a preset page according to an embodiment of the present disclosure;
FIG. 9 is a schematic diagram of a preset page according to an embodiment of the present disclosure;
FIG. 10 is a flowchart of a method for operating a virtual space according to an embodiment of the present disclosure;
FIG. 11 is a schematic diagram of an anchor terminal and a joint virtual space according to an embodiment of the present disclosure;
FIG. 12 is a block diagram of a device for operating a virtual space according to an embodiment of the present disclosure;
FIG. 13 is a block diagram of a device for operating a virtual space according to an embodiment of the present disclosure; and
FIG. 14 is a block diagram of an electronic device for operating a virtual space according to an embodiment of the present disclosure.

### DETAILED DESCRIPTION

In order to make a person skilled in the art well understand the technical solution of the present disclosure, the technical solution in embodiments of the present disclosure will be clearly and completely described below with reference to the accompanying drawings.

It should be noted that terms such as "first" and "second" in the description and claims of the present disclosure and the above-mentioned drawings are used to distinguish similar objects from each other, and are not intended to describe a specific order or sequence. It may be understood that such terms are interchangeable under appropriate circumstances so that an embodiment of the present disclosure described herein may be practiced in sequences other than those illustrated or described herein. The implementations described in the illustrative examples below are not intended to represent all implementations consistent with the present disclosure. Rather, they are merely examples of devices and methods consistent with some aspects of the present disclosure.

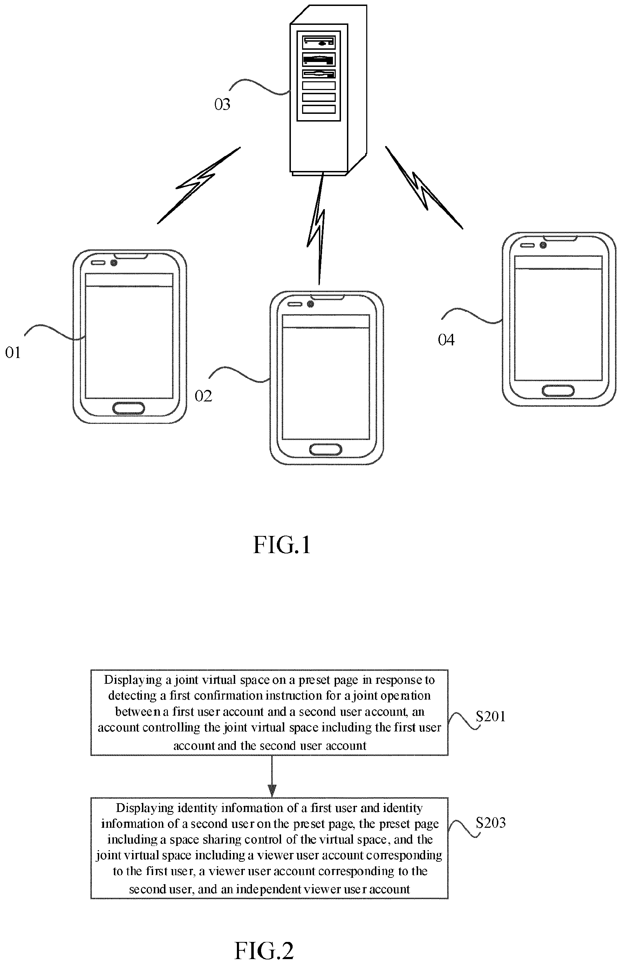

FIG. 1 is a schematic diagram of an application environment of a method for operating a virtual space operation according to an exemplary embodiment. As shown in FIG. 1, the application environment may include a first anchor terminal 01, a second anchor terminal 02, a server 03 and a viewer terminal 04.

In some embodiments, the above-mentioned first anchor terminal 01 corresponds to a terminal of a first user. If the first anchor terminal 01 detects a first confirmation instruction for a joint operation between a first user account and a second user account, a joint virtual space is displayed on a preset page of the first anchor terminal 01. An account controlling the joint virtual space includes the first user account and the second user account. Then, identity information of the first user and identity information of a second user may be displayed on the preset page. The joint virtual space includes a viewer user account corresponding to the first user, a viewer user account corresponding to the second user, and an independent viewer user account. The above-mentioned first anchor terminal 01 may include, but is not limited to, an electronic device such as a smart phone, a desktop computer, a tablet computer, a laptop computer, a smart speaker, a digital assistant, an augmented reality (AR)/virtual reality (VR) device, a smart wearable device and the like, and may also be a software running on the above-mentioned electronic device such as an application program, an applet, and the like. In some embodiments, an operating system running on the electronic device may include, but is not limited to, an Android system, an IOS system, linux, windows, Unix, and the like.

In some embodiments, the above-mentioned second anchor terminal 02 corresponds to a terminal of a second user. Correspondingly, if the second anchor terminal 02 detects a first confirmation instruction for a joint operation between a first user account and a second user account, a joint virtual space is displayed on a preset page of the second anchor terminal 02. An account controlling the joint virtual space includes the first user account and the second user account. Then, identity information of a first user and identity information of the second user may be displayed on the preset page. The joint virtual space includes a viewer user account corresponding to the first user, a viewer user account corresponding to the second user, and an independent viewer user account. The above-mentioned second anchor terminal 02 may include, but is not limited to, an electronic device such as a smart phone, a desktop computer, a tablet computer, a laptop computer, a smart speaker, a digital assistant, an augmented reality (AR)/virtual reality (VR) device, a smart wearable device and the like, and may also be a software running on the above-mentioned electronic device such as an application program, an applet, and the like. In some embodiments, an operating system running on the electronic device may include, but is not limited to, an Android system, an IOS system, linux, windows, Unix, and the like.

In some embodiments, the above-mentioned viewer terminal 04 corresponds to a terminal of a viewer. After the viewer terminal 04 generates a joint virtual space, the viewer terminal 04 may display space sharing information. The space sharing information is generated according to a first user account that shares the space sharing information. If a display instruction based on the space sharing information is detected, the joint virtual space is displayed on a preset page. The joint virtual space is determined based on a first confirmation instruction for a joint operation between the first user account and a second user account. An account controlling the joint virtual space includes the first user account and the second user account. Identity information of a first user, identity information of a second user and a viewer identity corresponding to the first user account are displayed on the preset page. The viewer identity is displayed due to entering the joint virtual space. The above-mentioned viewer terminal 04 may include, but is not limited to, an electronic device such as a smart phone, a desktop computer, a tablet computer, a laptop computer, a smart speaker, a digital assistant, an augmented reality (AR)/virtual reality (VR) device, a smart wearable device and the like, and may also be a software running on the above-mentioned electronic device such as an application program, an applet, and the like. In some embodiments, an operating system running on the electronic device may include, but is not limited to, an Android system, an IOS system, linux, windows, Unix, and the like.

In some possible embodiments, the above-mentioned sever 03 is established between the first anchor terminal 01, the second anchor terminal 02 and the viewer terminal 04, for transmitting various information. The server may include an independent physical server, a distributed system or server cluster composed of a plurality of physical servers, and may also include a cloud server providing basic cloud computing such as cloud service, cloud database, cloud computing, cloud function, cloud storage, network service, cloud communication, middleware service, domain name service, security service, content delivery network (CDN), big data and artificial intelligence platform.

FIG. 2 is a flowchart of a method for operating a virtual space according to an exemplary embodiment. As shown in FIG. 2, the method for operating a virtual space may be applied to the first anchor terminal or other node devices, and may include the following S201 and S203

In S201, a joint virtual space is displayed on a preset page if a first confirmation instruction for a joint operation between a first user account and a second user account is detected. An account controlling the joint virtual space includes the first user account and the second user account.

In an embodiment of the present disclosure, S201-S203 are described by using the first anchor terminal of the first user as an executing object.

In an embodiment of the present disclosure, the joint virtual space may be a live broadcasting room on a live broadcasting platform. A first independent virtual space and a second independent virtual space in the following are also live broadcasting rooms on the live broadcasting platform. The difference between the independent virtual space and the joint virtual space is mainly that the number of accounts controlling the virtual space is different.

In S203, identity information of a first user and identity information of a second user are displayed on the preset page. The joint virtual space includes a viewer user account corresponding to the first user, a viewer user account corresponding to the second user, and an independent viewer user account.

In some embodiments, before S201, there may be a plurality of forms with respect to the first and second anchor terminals.

In a first form of the above plurality of forms, both the first anchor terminal and the second anchor terminal create their own independent virtual spaces which are a first independent virtual space and a second independent virtual space respectively, which is described as follows.

The first independent virtual space created based on the first user account may be displayed on the preset page of the first anchor terminal, and at the same time, the identity information of the first user may be displayed on the preset page of the first anchor terminal.

In some possible embodiments, the above-mentioned identity information may be used to distinguish the first user from an ordinary viewer entering the independent virtual space.

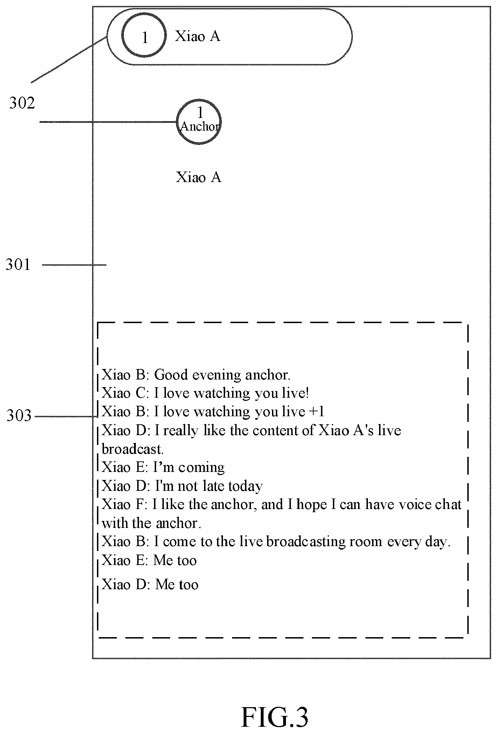

FIG. 3 is a schematic diagram of a preset page according to an exemplary embodiment, which shows a preset page 301 and identity information 302 of the first user on the preset page 301. The identity information may be represented by avatar identity information and/or nickname identity information "Xiao A" as shown in an anchor information area at the upper left corner of the preset page 301. Further, the avatar identity information and/or nickname identity information "Xiao A" may be displayed in a middle area of the preset page 301. The avatar identity information and/or nickname identity information "Xiao A" is the information corresponding to the first user. In some embodiments, as shown in the middle area of the preset page 301, a word such as "anchor" may also be displayed below the avatar identity information.

In addition, the preset page 301 shown in FIG. 3 may further include a message area 303 for a viewer entering the first independent virtual space (independent live broadcasting room). In some embodiments, after the first independent virtual space is displayed on the preset page of the first anchor terminal of the first user, on the basis of the first independent virtual space, space sharing information for entering the first independent virtual space may be shared by using a space sharing control included in the preset page. Then, the first anchor terminal may share the sharing information through various distribution channels. In some embodiments, the distribution channel includes a follow page, an intra-city page, a discovery page, a search interface, a profile page, and the like. After the viewer terminal obtains the sharing information through the above-mentioned distribution channel, the viewer terminal may enter the first independent virtual space by means such as clicking, copying, and the like.

Similarly, the second independent virtual space created based on the second user account may be displayed on the preset page of the second anchor terminal, and the identity information of the second user may be displayed on the preset page of the second anchor terminal.

In some embodiments, after the second independent virtual space is displayed on the preset page of the second anchor terminal of the second user, on the basis of the second independent virtual space, space sharing information for entering the second independent virtual space may be shared by using a space sharing control included in the preset page. Then, the second anchor terminal may share the sharing information through various distribution channels. In some embodiments, the distribution channel includes a follow page, an intra-city page, a discovery page, a search interface, a profile page, and the like. After the viewer terminal obtains the sharing information through the above-mentioned distribution channel, the viewer terminal may enter the second independent virtual space by means such as clicking, copying, and the like.

In a second form of the above plurality of forms, only one of the first anchor terminal and the second anchor terminal has created its own independent virtual space, which is described as follows.

The first independent virtual space created based on the first user account may be displayed on the preset page of the first anchor terminal, and the identity information of the first user may be displayed on the preset page of the first anchor terminal. At this time, an application may be opened in the second anchor terminal, but the second anchor terminal does not create its own independent virtual space; or the application may be not opened in the second anchor terminal; or the second anchor terminal may even be a viewer terminal in the first independent virtual space.

In some embodiments, the second independent virtual space created based on the second user account may be displayed on the preset page of the second anchor terminal, and the identity information of the second user may be displayed on the preset page of the second anchor terminal. At this time, an application may be opened in the first anchor terminal, but the first anchor terminal does not create its own independent virtual space; or the application may be not opened in the first anchor terminal; or the first anchor terminal may even be a viewer terminal in the second independent virtual space.

In a third form of the above plurality of forms, neither the first anchor terminal nor the second anchor terminal have created their own independent virtual space, which is described as follows.

The application may be opened in the first anchor terminal and the second anchor terminal, but the first anchor terminal and the second anchor terminal do not create their own independent virtual space; or the application may be not opened in neither the first anchor terminal nor the second anchor terminal.

In the above three forms, if the first live broadcasting terminal detects the first confirmation instruction for the joint operation between the first user account and the second user account, the joint virtual space may be displayed on the preset page. The account controlling the joint virtual space includes the first user account and the second user account.

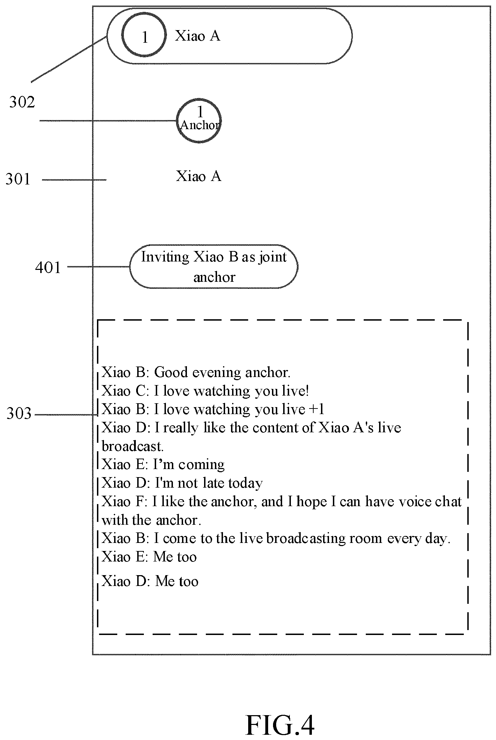

In some possible embodiments, FIG. 4 is a schematic diagram of a preset page according to an exemplary embodiment. The preset page of the first anchor terminal may be as shown in FIG. 4, which includes a joint operation control 401 corresponding to the second user. If the first anchor terminal detects a joint operation command triggered based on the joint operation control, the first anchor terminal may send a joint operation request to the electronic device corresponding to the second user (the second anchor terminal). If the first anchor terminal receives a confirmation instruction for the joint operation request fed back by the electronic device corresponding to the second user, the first anchor terminal may add preset identity information of the second user on the preset page thereof.

It will be described in conjunction with the above example in FIG. 4. When the first anchor terminal detects that the interface area corresponding to the nickname "Xiao B" is touched, the joint operation control 401 may be displayed on the preset page. The joint operation control may be displayed with words "Inviting Xiao B as a co-anchor".

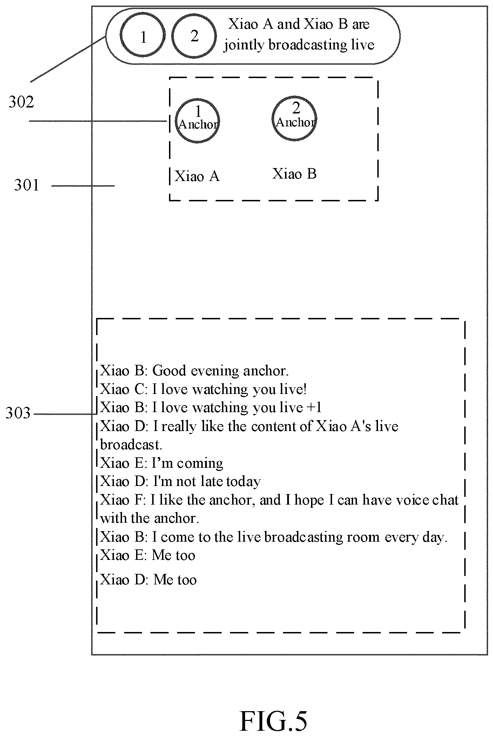

Specifically, if the first anchor terminal detects the joint operation command triggered based on the joint operation control, that is, when the first anchor terminal detects that the area corresponding to the joint operation control is touched, the first anchor terminal may send the joint operation request to the electronic device corresponding to Xiao B (i.e., the second anchor terminal). If the first anchor terminal receives the confirmation instruction for the joint operation request fed back by the electronic device corresponding to the second user, the first anchor terminal may add preset identity information of the second user on the preset page thereof, and a schematic preset page as shown in FIG. 5 may be obtained finally.

FIG. 5 is a schematic diagram of a preset page according to an exemplary embodiment, including updated identity information 302. The updated identity information 302 may be as shown in the anchor information area at the upper left corner of the preset page 301, and is indicated by using the avatar identity information corresponding to Xiao A and/or the nickname identity information "Xiao A", and the avatar identity information corresponding to Xiao B and/or nickname identity information "Xiao B". The avatar identity information corresponding to Xiao A and/or the nickname identity information "Xiao A", and the avatar identity information corresponding to Xiao B and/or the nickname identity information "Xiao B" may also be displayed in the middle area of the preset page 301. The avatar identity information corresponding to Xiao A and the nickname identity information "Xiao A" are the information corresponding to the first user, and the avatar identity information corresponding to Xiao B and the nickname identity information "Xiao B" are the information corresponding to the second user.

In some embodiments, a word such as "anchor" may also be displayed under the avatar identity information shown in the middle area of the preset page 301, which is used to indicate that both of Xiao A and Xiao B become the anchor after the first anchor terminal detects a confirmation instruction for the joint operation with the second user.

In an embodiment of the present disclosure, the joint operation control provided on the preset page of the first anchor terminal not only allows the first user to invite other users to become the anchor, but also increases the interest of the live broadcasting room and improves the user experience.

In an embodiment, the second user may be any user in the first independent virtual space of the first user, for example, may be a user who is having voice chat with the first user, or may not be a user who is having the voice chat with the first user but a user who leaves a message in a message area, or may be other users who do not enter the independent virtual space.

However, if the first independent virtual space of the first user is a virtual space under a certain scene, for example, a virtual space for expressing some opinions on certain things, and the second user is a user who is reluctant to express his/her opinions and only wants to listen to opinions, however is invited as the second user for the joint operation (such as joint live broadcasting, joint output of opinions), it may cause an awkward silence of the live broadcasting room, which leads to a waste of resources allocated to the second user. In view of the above, the second user may be a user with a preset interaction behavior with the first user in the independent virtual space. In some embodiments, the preset interaction behavior may be the behavior of having voice chat with the first user, that is, the viewer who is outputting opinions may be upgraded to a co-anchor.

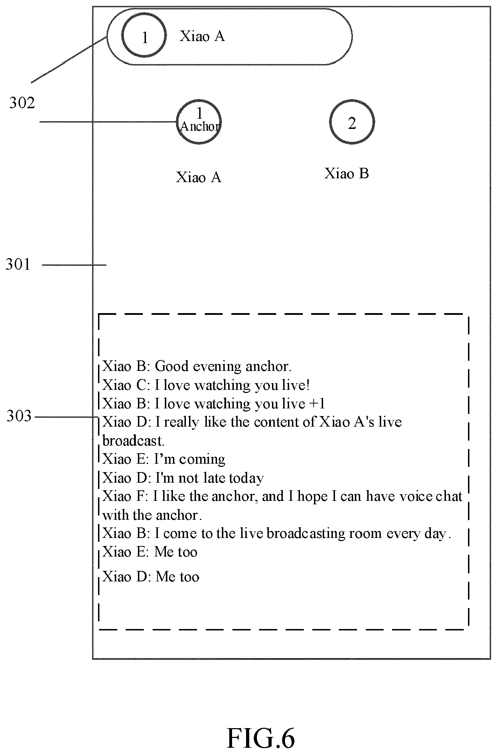

FIG. 6 is a schematic diagram of a preset page according to an exemplary embodiment. FIG. 6 differs from FIG. 3 in that in the middle area of the preset page 301, the avatar identity information of Xiao B and/or the nickname identity information "Xiao B" are displayed additionally. In the implementation corresponding to FIG. 6, Xiao B is just a viewer who is having voice chat with the first user Xiao A. Only when Xiao B is determined by the first user as the second user to have voice chat with, that is, only after the first anchor terminal detects the joint operation command triggered based on the joint operation control, sends the joint operation request to the electronic device corresponding to the second user, and then receives the confirmation instruction for the joint operation fed back by the electronic device corresponding to the second user, the preset identity information of the second user Xiao B can be added onto the preset page to obtain the schematic diagram of the preset page as shown in FIG. 5.

In some embodiments, in the schematic diagram shown in FIG. 6, the avatar identity information of Xiao B in the middle area of the preset page 301 may be a joint operation control. When the first anchor terminal detects that the avatar identity information of Xiao B is touched, the first anchor terminal may send a joint operation request to the electronic device corresponding to Xiao B (the second anchor terminal).

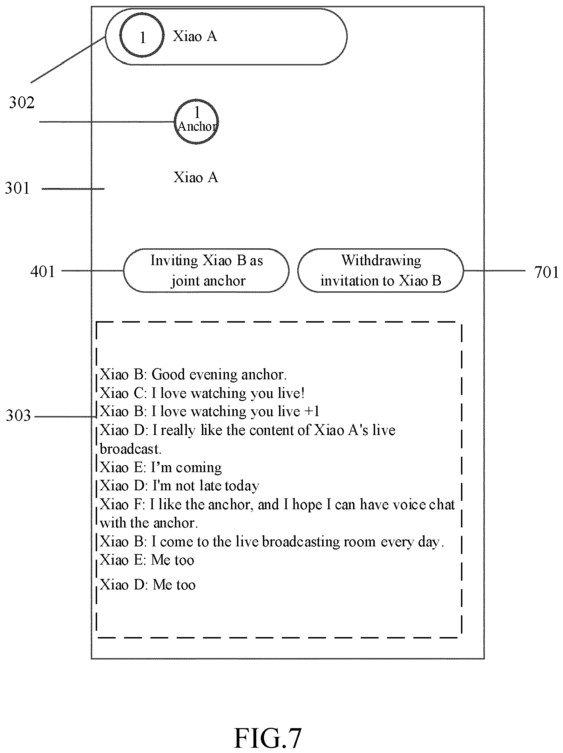

In some possible embodiments, FIG. 7 is a schematic diagram of a preset page according to an exemplary embodiment. As shown in FIG. 7, the preset page 301 may further include a joint operation withdrawing control 701 for the second user. A joint operation withdrawing instruction triggered based on the joint operation withdrawing control is detected, the first anchor terminal may send a joint operation withdrawing command to the electronic device corresponding to the second user (the second anchor terminal). The joint operation withdrawing command is used to withdraw the joint operation request.

In this way, on the one hand, the first user may have the right to withdraw the joint operation request when the second user does not handle the joint operation request, and on the other hand, the joint operation request may be withdrawn in time in a case where the joint operation request is sent incorrectly due to a touch of the first user by mistake.

The above embodiment describes that the first anchor terminal corresponding to the first user sends the joint operation request to the second anchor terminal corresponding to the selected second user. In some other possible embodiments, the joint operation request may be initiated by the second user.

In some possible embodiments, if a joint operation request sent by the electronic device corresponding to the second user is detected, the first anchor terminal may display a joint operation confirmation control on the preset page (for example, in the form of a pop-up window). If a confirmation instruction for the joint operation triggered based on the joint operation determination control is detected, the identity information of the second user may be added onto the preset page, that is, the second user is upgraded from the viewer in the live broadcasting room to a co-anchor.

In some embodiments, when the joint operation request sent by the second anchor terminal corresponding to the second user is detected, the first anchor terminal may display a joint operation confirmation control and a joint operation rejection control on the preset page. If a rejection instruction to the joint operation triggered based on the joint operation rejection control is detected, the first anchor terminal maintains the display of the independent virtual space of the first user on the preset page.

In this way, the embodiment of the present disclosure may improve the viewer's sense of participation and at the same time may enrich the operability of the live broadcasting room by allowing the viewer in the first independent virtual live broadcasting room to become a co-anchor. In an embodiment of the present disclosure, the preset page may include a space sharing control of the virtual space. If a space sharing instruction triggered based on the space sharing control is detected, space sharing information is generated according to the first user account. The space sharing information is used to guide an electronic device that launches the space sharing information to enter the joint virtual space.

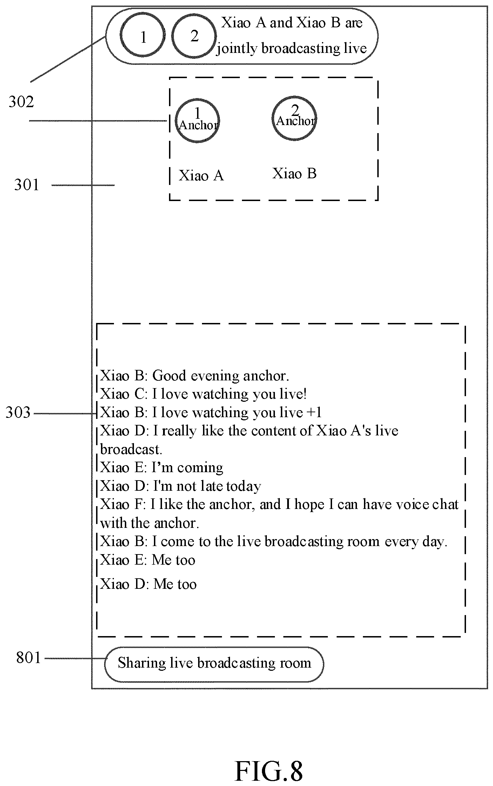

In some possible embodiments, FIG. 8 is a schematic diagram of a preset page according to an exemplary embodiment. As shown in FIG. 8, the preset page further includes a space sharing control 801 of the virtual space. If the first anchor terminal detects a space sharing instruction triggered based on the space sharing control, the first anchor terminal may generate space sharing information according to the first user account. In some embodiments, the first anchor terminal may also generate the space the sharing information according to the identity information of the joint virtual space and the first user account. The space sharing information is used to guide an electronic device that launches the space sharing information to enter the joint virtual space. Subsequently, the first anchor terminal may share the space sharing information on various distribution channels. In some embodiments, the distribution channel includes a follow page, an intra-city page, a discovery page, a search interface, a profile page, and the like. After the viewer obtains the sharing information through the above-mentioned distribution channel, the electronic device of the viewer may enter the joint virtual space by means such as clicking, copying, and the like.

In this way, the joint virtual space (joint live broadcasting room) may use the space sharing information shared by the first user to share the joint live broadcasting room, which may improve the exposure of the joint live broadcasting room, so that more viewers may enter the joint live broadcasting room, which increases the scale and activity of the joint live broadcasting room, promotes the communication of users in the joint live broadcasting room and enriches the users' spare time life.

In some possible embodiments, the displaying way of the independent virtual space and the joint virtual space on the preset page may not be the same as those shown in FIGS. 3 to 8, and in such displaying way, the anchor user may appear. In order to adapt to such displaying way, the joint virtual space includes a first sub-virtual space and a second sub-virtual space. The first sub-virtual space corresponds to a first user account, and the second sub-virtual space corresponds to a second user account. That is, the first sub-virtual space and the second sub-virtual space may be represented in the form of two independent display boxes on the preset page.

In an embodiment of the present disclosure, in order to enable the first user to view his/her own playback effect more clearly, the first anchor terminal may only display the first sub-virtual space on the preset page.

In some embodiments, the first anchor terminal may display the first sub-virtual space and the second sub-virtual space on the preset page.

In an embodiment of the present disclosure, in order to enable the viewer to immediately note the anchor who shares the space sharing information (who is generally the anchor that the viewer likes) when entering the joint virtual space, the space sharing information may be used to guide the electronic device (the viewer terminal) that launches the space sharing information to display only the first sub-virtual space on the preset page.

In some embodiments, the space sharing information may be used to guide the electronic device (the viewer terminal) that launches the space sharing information to display the first sub-virtual space and the second sub-virtual space on the preset page.

In an embodiment of the present disclosure, if the first anchor terminal detects the first confirmation instruction for the joint operation between the first user account and the second user account, the first anchor terminal may first obtain first permission information corresponding to the first user account and second permission information corresponding to the second user account. The first anchor terminal displays the joint virtual space on the preset page if the first permission information and the second permission information satisfy preset permission information.

Specifically, after the first confirmation instruction for the joint operation between the first anchor terminal and the second anchor terminal is detected, the first permission information and the second permission information may be obtained through an anchor permission management module. The first permission information includes broadcasting permission, ban information and violation information of the first user, and the second permission information includes broadcasting permission, ban information and violation information of the second user. Only when both the first permission information and the second permission information satisfy the preset permission information (the preset permission information may include that the user has broadcasting permission, no-ban information and no-violation information), the first anchor terminal and the second anchor terminal display the joint virtual space on their respective preset pages, so that the joint virtual space may be successfully opened. At the same time, it ensures that the first user and the second user are anchor users having good reputation and following the rules, thereby ensuring the normal and orderly progress of the subsequent joint virtual space.

In an embodiment of the present disclosure, after the first user and the second user become the anchor users in the joint virtual space, they may have the ability to pull other anchors, that is, they may invite other users to become the anchor users of the joint virtual space.

In an embodiment of the present disclosure, in order to provide the first user and the second user with a fair environment, the second user and the first user may have the same right to control the joint virtual space, for example, the right to invite other users to become anchors.

In some embodiments, if the first anchor terminal detects second confirmation information for a joint operation between the first user account and a third user account or a joint operation between the second user account and the third user account, identity information of a third user may be displayed on the preset page. The account controlling the joint virtual space includes the third user account in addition to the first user account and the second user account.

In some embodiments, when a third anchor terminal is invited by the first anchor terminal or the second anchor terminal, a joint management live broadcasting module may be used to review permission information (broadcasting right, ban information and violation information) of the third user. Only when the permission information of the third user satisfies the preset permission information, can the third user be given the permission to manage and control the joint virtual space and become a member thereof.

That is, no matter the first anchor terminal invites the third anchor terminal or the second anchor terminal invites the third anchor terminal, the third anchor terminal may be pulled into the joint virtual space to be an anchor.

In some embodiments, the third user has the same management rights as the first user and the second user. Other users may be invited to become anchors. In some possible embodiments, if the first anchor terminal detects third confirmation information for a joint operation between the third user account and a fourth user account, identity information of a fourth user may be displayed on the preset page. The account controlling the j oint virtual space further includes the fourth user account.

In this way, because there are a plurality of anchor roles in one joint virtual space, the joint virtual space may be managed jointly and collaboratively, which breaks the limitation of only one center role in the original live broadcasting room, and improves the management and control of the joint virtual space.

In some embodiments, the joint virtual space includes a viewer user account corresponding to the first user, a viewer user account corresponding to the second user, and an independent viewer user account. Specifically, the newly established joint virtual space may include, in addition to the first user account corresponding to the first user and the second user account corresponding to the second user, the viewer user account corresponding to the first user, the viewer user account corresponding to the second user and the independent viewer user account. The viewer user account corresponding to the first user may enter the joint virtual space through the space sharing information shared by the first user account, the viewer user account corresponding to the second user may enter the joint virtual space through the second user account, and the independent viewer user account may enter the joint virtual space not through the space sharing information shared by the user. When a third user is added to the joint virtual space, the joint virtual space may include a viewer user account corresponding to the third user.

In some possible embodiments, when setting the management and control permission, since the first anchor terminal and the second anchor terminal are the first batch of anchors, the permissions of the two anchor terminals may be greater than the permissions of the subsequent anchor terminals, so that it may distinguish between a primary anchor terminal and a secondary anchor terminal while ensuring coordinated management and control.

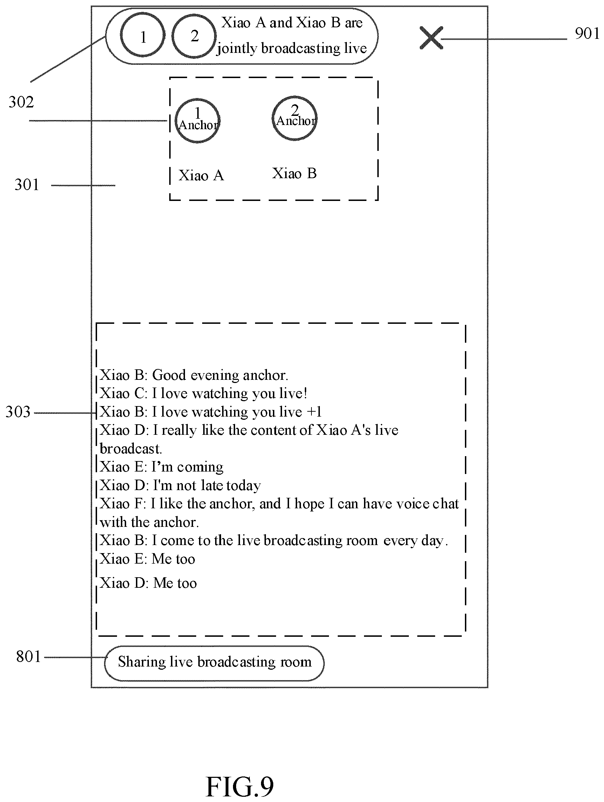

FIG. 9 is a schematic diagram of a preset page according to an exemplary embodiment. As shown in FIG. 9, the preset page 301 further includes a space exiting control 901 of the virtual space. If the first anchor terminal detects a space exiting instruction triggered based on the space exiting control by the first user, the joint virtual space may be exited.

In some possible embodiments, if the first anchor terminal detects the space exiting instruction corresponding to the second user, the first anchor terminal may delete the preset identity information of the second user on the preset page, and thus maintains the displaying of the joint virtual space on the preset page.

The space exiting instruction corresponding to the second user may be sent by the second anchor terminal to the first anchor terminal. After the first anchor terminal receives the space exiting instruction, the first anchor terminal may delete the preset identity information of the second user on the preset page.

All the above implementation steps are described by taking the first anchor terminal of the first user as the executing subject, and the implementation steps of the second anchor terminal in this part may refer to the implementation steps of the first anchor terminal, which therefore are not repeated herein.

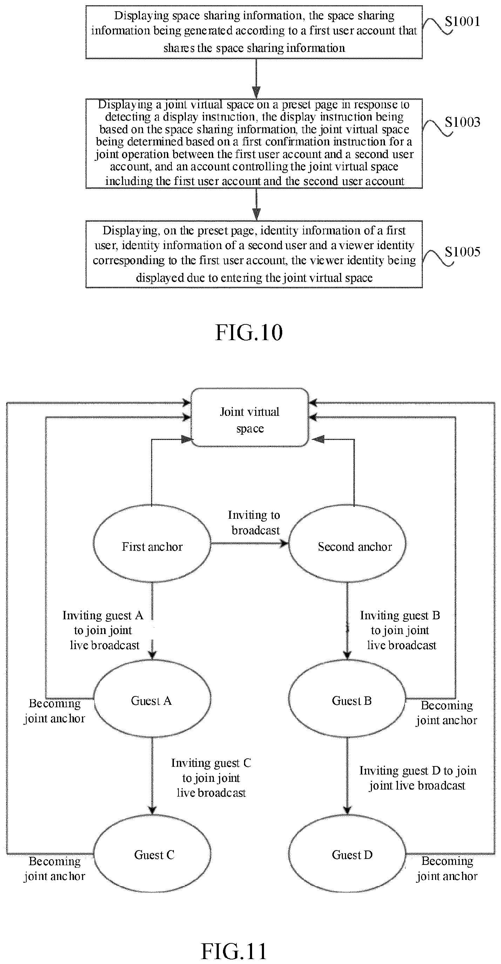

FIG. 10 is a flowchart showing a method for operating a virtual space according to an exemplary embodiment. As shown in FIG. 10, the method for operating a virtual space may be applied to a viewer terminal or other node devices, and includes the following S1001 to S1005.

In S1001, space sharing information is displayed. The space sharing information is generated according to a first user account that shares the space sharing information.

In S1003, a joint virtual space is displayed on a preset page if a display instruction is detected. The display instruction is based on the space sharing information, the joint virtual space is determined based on a first confirmation instruction for a joint operation between the first user account and a second user account, and an account controlling the joint virtual space includes the first user account and the second user account.

In S1005, identity information of a first user, identity information of a second user and a viewer identity corresponding to the first user account is displayed on the preset page. The viewer identity is displayed due to entering the joint virtual space.

The executing subject of S1001-S1005 is the viewer terminal. S1001-S1005 mainly relates to the scenario in which after the first anchor terminal and the second anchor terminal establish the joint virtual space, the viewer terminal enters the joint virtual space based on the space sharing information shared by the first anchor terminal or the second anchor terminal or enters the joint virtual space in other ways. For the details of the above-mentioned scenario, please refer to the above description, which will not be repeated here.

In some embodiments, when the viewer terminal enters the joint virtual space, the user identity of the viewer may be displayed on the preset page due to entering the joint virtual space, and is displayed as the viewer identity corresponding to the first user account.

In some possible embodiments, the displaying way of the independent virtual space and the joint virtual space on the preset page may not be the same as those shown in FIGS. 3 to 8, and in such displaying way, the anchor user may appear as a frame that the anchor is singing and dancing may be displayed. In order to adapt to such displaying way, after the viewer enters the joint virtual space established jointly by the first anchor terminal and the second anchor terminal, the joint virtual space including a first sub-virtual space and a second sub-virtual space may be displayed on the preset page of the viewer terminal. The first sub-virtual space corresponds to a first user account, and the second sub-virtual space corresponds to a second user account. That is, the first sub-virtual space and the second sub-virtual space may be represented in the form of two independent display boxes on the preset page.

In an embodiment of the present disclosure, in order to enable the viewer to immediately note the anchor who shares the space sharing information (who may be the anchor that the viewer likes), the viewer terminal may only display, on the preset page, the first sub-virtual space or the second sub-virtual space corresponding to the space sharing information.

In some embodiments, the viewer terminal may display both the first sub-virtual space and the second sub-virtual space on the preset page.

In an embodiment of the present application, multiple anchor users may broadcast live in the joint virtual space because of several invitations between anchor terminals. For example, as shown in FIG. 11 which is a schematic diagram of an anchor terminal and a joint virtual space according to an exemplary embodiment, there are six anchor users which are a first anchor, a second anchor, a guest A who has been invited by the first anchor to become the anchor, a guest B who has been invited by the second anchor to become the anchor, a guest C who has been invited by the guest A to become the anchor, and guest D who has been invited by guest B. In some embodiments, the viewer terminal may display six sub-virtual spaces (a first sub-virtual space, a second sub-virtual space, a third sub-virtual space, a fourth sub-virtual space, a fifth sub-virtual space and a sixth sub-virtual space) corresponding to the six anchor users on the preset page. In some embodiments, in view of the size of the preset page of the viewer terminal, less than 6 sub-virtual spaces, for example, only 4 sub-virtual spaces, may be displayed.

In some embodiments, the viewer may see the exposure of the joint virtual space with his/her favorite anchor from various distribution portals (including the space sharing information corresponding to a search page, an intra-city page, a featured content page and the like), and after the viewer terminal enters the joint virtual space, the viewer may immediately see the sub-virtual space corresponding to this anchor. For example, if the viewer terminal enters the joint virtual space through the space sharing information of the second anchor terminal, the second sub-virtual space may be first displayed on the preset page of the viewer terminal. In some embodiments, other sub-virtual spaces such as the first sub-virtual space, the third sub-virtual space and the fourth sub-virtual space may also be displayed on the preset page.

However, in an embodiment of the present disclosure, in addition to the second sub-virtual space, there may be anchors corresponding to the other sub-virtual space outputting wonderful content (speaking, singing, dancing and the like). Therefore, when the viewer terminal detects a space jumping instruction, the viewer terminal may determine recommendation information of a sub-virtual space. The recommendation information of the sub-virtual space includes first identity information of a to-be-recommended sub-virtual space. Then, second identity information of a sub-virtual space currently displayed on the preset page may be obtained, and the to-be-recommended sub-virtual space is displayed on the preset page if the first identity information and the second identity information are not matched.

For example, the recommendation information of the sub-virtual space includes the first identity information of the first sub-virtual space, and the second identity information of the second sub-virtual space currently displayed on the preset page is obtained. Obviously, the first identity information and the second identity information are not matched. In such case, the viewer terminal may display the first sub-virtual space to be recommended on the preset page. In some embodiments, if only one sub-virtual space can be displayed on the preset page, the second sub-virtual space may be hidden, and if a plurality of sub-virtual spaces may be displayed on the preset page, the second sub-virtual space and the first sub-virtual space may be displayed on the preset page at the same time.

In this way, in an embodiment of the present disclosure, the sub-virtual space outputting excellent content may be effectively exposed, thereby enabling more viewers to watch high-quality content.

In some embodiments, the space jumping instruction is triggered when the viewer terminal detects that a duration of displaying the sub-virtual space corresponding to the second identity information on the preset page reaches a preset duration, and then the viewer terminal determines the recommendation information of the sub-virtual space. For example, when the viewer terminal detects that the duration of displaying the sub-virtual space corresponding to the second identity information on the preset page has exceeded 2 minutes, the viewer terminal may trigger the space jumping instruction. The preset duration may be set according to an experience value, or may be set randomly. In this way, the sub-virtual space outputting the excellent content may be effectively exposed by continuously updating the recommendation information of the sub-virtual space, so that more viewers can watch high-quality content.

In some embodiments, the preset page of the viewer terminal includes a space jumping control. If the space jumping instruction triggered based on the space jumping control is detected, the recommendation information of the sub-virtual space may be determined. Specifically, the space jumping control may be triggered to generate the space jumping instruction when being touched by the viewer user.

In this way, the embodiment of the present disclosure allows the viewer terminal to exchange the sub-virtual space through the set control jumping control, therefore the user experience is improved, so that the sub-virtual space outputting the excellent content may be effectively exposed and more viewers can watch high-quality content.

In order to make the recommendation information of the sub-virtual space more objective and meet the needs of the viewer, an embodiment of the present disclosure further provides a method for determining the recommendation information of the sub-virtual space. In this method, the viewer terminal may determine anchor output information and/or viewer interaction information of each sub-virtual space in the joint virtual space; and determine the recommendation information of the sub-virtual space according to the anchor output information and/or the viewer interaction information. In some embodiments, the recommendation information of the sub-virtual space may be determined according to the anchor output information, the recommendation information of the sub-virtual space may be determined according to the viewer interaction information, and the recommendation information of the sub-virtual space may be determined according to the anchor output information and the viewer interaction information.

The viewer interaction information may include agreement information of output content (like information), output information of virtual resource (reward information), comment information of output content (comment information), and anchor-being-followed information (follow information).

In some embodiments, the viewer terminal determines language content output information and action content output information of each sub-virtual space in the joint virtual space; determines first time information corresponding to the language content output information; determines second time information corresponding to the action content output information; and determines the anchor output information of each sub-virtual space according to the language content output information, the action content output information, the first time information and the second time information.

The language content output information includes language content or singing content, and the action content output information includes dancing content, acrobatics content, and the like.

Specifically, the viewer terminal collects audio + video data of the anchor, and use a local audio recognition model to determine whether each anchor is speaking. The viewer terminal uses a facial recognition model to determine whether the anchor is singing and the like, and uses a behavior recognition model to determine whether the anchor is dancing and the like. The viewer terminal summarizes the comprehensive information of the above modules to confirm whether each anchor is performing effective live broadcasting, and confirm the effective live broadcasting duration of the anchor through discrete sampling. Finally, the anchor output information of each sub-virtual space is determined according to the language content output information, the action content output information, the first time information and the second time information. Of course, the above determining the anchor output information of each sub-virtual space may also be performed by an anchor terminal such as the first anchor terminal and the second anchor terminal, and after the anchor output information of each sub-virtual space is determined, the recommendation information of the sub-virtual space is obtained according to the anchor output information of each sub-virtual space and is output to the viewer terminal, so that the viewer terminal can update the sub-virtual space displayed on the preset page according to the recommendation information of the sub-virtual space.

In this way, the recommendation information of the sub-virtual space may be determined more fairly and objectively.

In some embodiments, the preset page further includes a viewer interaction control. If the viewer terminal detects a viewer interaction instruction triggered based on the viewer interaction control, the viewer interaction information carried in the viewer interaction instruction may be displayed on the preset page. The viewer interaction information may include agreement information of output content (like information), output information of virtual resource (reward information), comment information of output content (comment information), and anchor-being-followed information (follow information).

The output content (like information), output information of virtual resource (reward information), comment information of output content (comment information), and anchor-being-followed information (follow information) may be output to all anchors at the same time, or may be output directionally to a certain anchor.

For example, the output information of virtual resource further includes directional output information of virtual resource and non-directional output information of virtual resource, for example, output information of virtual resource rewarded to the first user and output information of virtual resource not defining the anchor to be rewarded. In this way, the anchor output information of each sub-virtual space may be used to indicate allocation information of the non-directional output information of virtual resource for an anchor user account corresponding to each sub-virtual space. For example, the revenue of the joint virtual live broadcasting room may be divided according to the effective live broadcasting duration of each anchor, and the revenue of each anchor may be calculated according to the contribution ratio to the live broadcasting room in combination with the amount of directional gifts, red envelopes received and the like.

In view of the above, in the present disclosure, a joint virtual space in which a plurality of users share responsibility may be established through a determination command for a joint operation, which may reduce waste of resources provided by a platform due to poor ability and quality of a single anchor, and at the same time, may increase the application diversity of virtual space.

At the same time, as each anchor user has the same control and management authority over the joint virtual space, a true balance may be achieved between respective anchor users, which provides basis for respective anchors to share the resources of the joint virtual space fairly based on the effectiveness of the output content.

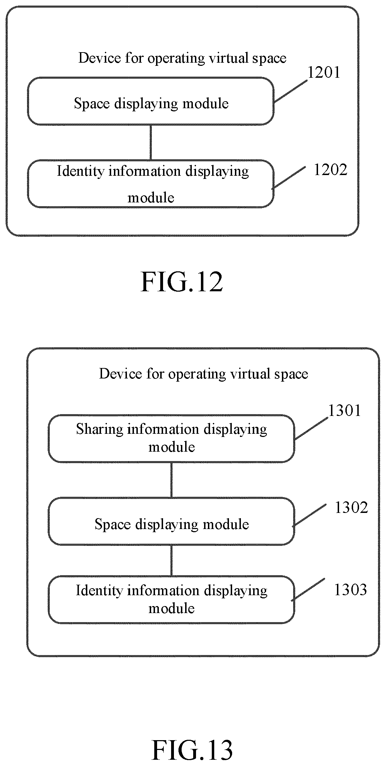

FIG. 12 is a block diagram of a device for operating a virtual space according to an exemplary embodiment. Referring to FIG. 11, the device includes a space displaying module 1201 and an identity information displaying module 1202.

The space displaying module 1201 is configured to display a joint virtual space on a preset page in response to detecting a first confirmation instruction for a joint operation between a first user account and a second user account. An account controlling the joint virtual space includes the first user account and the second user account.

The identity information displaying module 1202 is configured to display identity information of a first user and identity information of a second user on the preset page.

The joint virtual space includes a viewer user account corresponding to the first user, a viewer user account corresponding to the second user, and an independent viewer user account.

In some possible embodiments, the preset page includes a space sharing control for the virtual space, and the device further includes:
a sharing information generating module, configured to, in response to detecting a space sharing instruction triggered based on the space sharing control, generate space sharing information according to the first user account, the space sharing information being configured to guide an electronic device that launches the space sharing information to enter the joint virtual space.

In some possible embodiments, the joint virtual space includes a first sub-virtual space and a second sub-virtual space, the first sub-virtual space corresponds to the first user account, and the second sub-virtual space corresponds to the second user account, and the space displaying module is configured to: display at least the first sub-virtual space on the preset page.

In some possible embodiments, the space sharing information is configured to guide the electronic device that launches the space sharing information to display at least the first sub-virtual space on a preset page of the electronic device that launches the space sharing information.

In some possible embodiments, the identity information displaying module is configured to:
display identity information of a third user on the preset page in response to detecting second confirmation information for a joint operation between the first user account and a third user account or a joint operation between the second user account and the third user account. The account controlling the joint virtual space further includes the third user account.

In some possible embodiments, the identity information displaying module is configured to:

display identity information of a fourth user on the preset page in response to detecting third confirmation information for a joint operation between the third user account and a fourth user account. The account controlling the joint virtual space further includes the fourth user account.

In some possible embodiments, the space displaying module is configured to:
obtain first permission information corresponding to the first user account and second permission information corresponding to the second user account in response to detecting the first confirmation instruction for the joint operation between the first user account and the second user account; and
display the joint virtual space on the preset page in response to that the first permission information and the second permission information satisfy preset permission information.

The specific manner in which each module of the device in the above embodiments performs operations has been described in detail in the method embodiments, and will not be described in detail here.

FIG. 13 is a block diagram of a device for operating a virtual space according to an exemplary embodiment. Referring to FIG. 13, the device includes a sharing information displaying module 1301, a space displaying module 1302 and an identity information displaying module 1303.

The sharing information displaying module 1301 is configured to display space sharing information. The space sharing information is generated according to a first user account that shares the space sharing information.

The space displaying module 1302 is configured to display a joint virtual space on a preset page in response to detecting a display instruction. The display instruction is based on the space sharing information, the joint virtual space is determined based on a first confirmation instruction for a joint operation between the first user account and a second user account, and an account controlling the joint virtual space includes the first user account and the second user account.

The identity information displaying module 1303 is configured to display, on the preset page, identity information of a first user, identity information of a second user and a viewer identity corresponding to the first user account. The viewer identity is displayed due to entering the joint virtual space.

In some possible embodiments, the joint virtual space includes a first sub-virtual space and a second sub-virtual space, the first sub-virtual space corresponds to the first user account, and the second sub-virtual space corresponds to the second user account, and the space displaying module is configured to: display at least the first sub-virtual space on the preset page.

In some possible embodiments, the device further includes:
a recommendation information determining module, configured to determine recommendation information of a sub-virtual space in response to detecting a space jumping instruction, the recommendation information of the sub-virtual space including first identity information of a to-be-recommended sub-virtual space; and
an identity information obtaining module, configured to obtain second identity information of a sub-virtual space currently displayed on the preset page,
the space displaying module is configured to display the to-be-recommended sub-virtual space on the preset page in response to that the first identity information and the second identity information are not matched.

In some possible embodiments, the recommendation information determining module is configured to:
trigger the space jumping instruction in response to detecting that a duration of displaying the sub-virtual space corresponding to the second identity information on the preset page reaches a preset duration; and
determine the recommendation information of the sub-virtual space.

In some possible embodiments, the preset page includes a space jumping control, and the recommendation information determining module is configured to:
determine the recommendation information of the sub-virtual space in response to detecting the space jumping instruction triggered based on the space jumping control.

In some possible embodiments, the recommendation information determining module is configured to:
determine at least one of anchor output information and viewer interaction information of each sub-virtual space in the joint virtual space; and
determine the recommendation information of the sub-virtual space according to the at least one of the anchor output information and the viewer interaction information.

In some possible embodiments, the recommendation information determining module is configured to:
determine language content output information and action content output information of each sub-virtual space in the joint virtual space;
determine first time information corresponding to the language content output information;
determine second time information corresponding to the action content output information; and
determine the anchor output information of each sub-virtual space according to the language content output information, the action content output information, the first time information and the second time information.

In some possible embodiments, the preset page includes a viewer interaction control, and the device further includes an interaction information displaying module, configured to:
display, in response to detecting a viewer interaction instruction triggered based on the viewer interaction control, the viewer interaction information carried in the viewer interaction instruction on the preset page.

The viewer interaction information includes agreement information of output content, output information of virtual resource, comment information of output content, and anchor-being-followed information.

In some possible embodiments, the output information of virtual resource includes directional output information of virtual resource and non-directional output information of virtual resource.

The anchor output information of each sub-virtual space is configured to indicate allocation information of the non-directional output information of virtual resource for an anchor user account corresponding to each sub-virtual space.

The specific manner in which each module of the device in the above embodiments performs operations has been described in detail in the method embodiments, and will not be described in detail here.

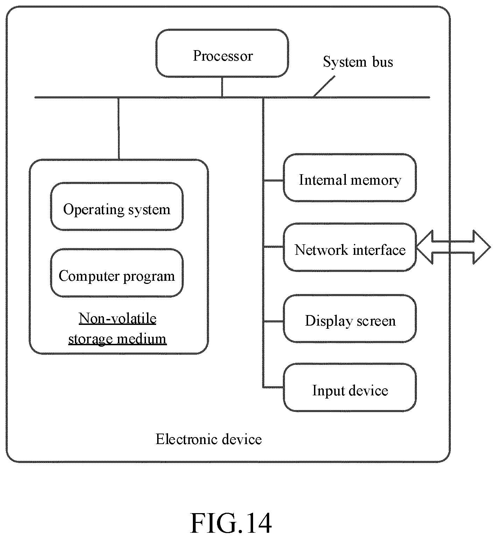

FIG. 14 is a block diagram of an electronic device 1400 for operating a virtual space according to an exemplary embodiment.

The electronic device may be a first terminal or a second terminal, and the structure thereof may be as shown in FIG. 14. The electronic device includes a processor, a memory and a network interface which are connected by a system bus. The processor of the electronic device is used to provide computing and control capabilities. The memory of the electronic device includes a non-volatile storage medium and an internal memory. The nonvolatile storage medium stores an operating system and a computer program. The internal memory provides an environment for the execution of the operating system and the computer program in the non-volatile storage medium. The network interface of the electronic device is used to communicate with an external terminal through a network connection. The computer program, when being executed by the processor, implements a method for operating a virtual space.

A person skilled in the art may understand that the structure shown in FIG. 14 is only a block diagram of a partial structure related to the solution of the present disclosure, and does not constitute a limitation on the electronic device to which the solution of the present disclosure is applied. The specific electronic device may include more or fewer components than shown in the figures, or combine certain components, or have a different arrangement of components.

An exemplary embodiment further provides an electronic device, including: a processor; and a memory for storing instructions executable by the processor; the processor is configured to execute the instructions to implement the method for operating a virtual space as described in the embodiment of the present disclosure.

An exemplary embodiment further provides a computer-readable storage medium having instructions stored thereon that, when being executed by a processor of an electronic device, cause the electronic device to perform the method for operating a virtual space as described in the embodiment of the present disclosure.

An exemplary embodiment further provides a computer program product including a computer program, the computer program is stored in a readable storage medium, and at least one processor of a computer device reads and executes the computer program from the readable storage medium to cause the computer device to perform the method for operating a virtual space as described in the embodiment of the present disclosure.

A person skilled in the art may understand that all or part of the processes in the methods of the above embodiments may be implemented by instructing relevant hardware through a computer program. The computer program may be stored in a non-volatile computer-readable storage medium, and when the computer program is executed, the processes of the above-mentioned method embodiments may be implemented. Any memory, storage, database or other medium used in the various embodiments of the present disclosure may include non-volatile and/or volatile memory. The nonvolatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, the RAM is available in various forms such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), rambus direct RAM (RDRAM), direct rambus dynamic RAM (DRDRAM), and rambus dynamic RAM (RDRAM) and the like.

A person skilled in the art may easily conceive of other embodiments of the present disclosure after considering the specification and practicing the invention disclosed herein. The present application is intended to cover any variations, uses, or adaptations of the present disclosure that follow the general principle of the present disclosure and include the common knowledge or techniques in the technical field not disclosed by the present disclosure. The specification and examples are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

Some embodiments of the publication are specified in the following paragraphs:
Paragraph 1. A method for operating a virtual space, performed by a first anchor terminal corresponding to a first user account, including:
   displaying a joint virtual space on a preset page in response to a first confirmation instruction for a joint operation between the first user account and a second user account, wherein an account controlling the joint virtual space includes the first user account and the second user account; and
   displaying identity information of a first user and identity information of a second user on the preset page,
   wherein the joint virtual space includes a viewer user account corresponding to the first user, a viewer user account corresponding to the second user, and an independent viewer user account.
Paragraph 2. The method according to paragraph 1, wherein the preset page includes a space sharing control for the virtual space, and the method further includes:
   in response to a space sharing instruction triggered based on the space sharing control, generating space sharing information according to the first user account,
   wherein the space sharing information is configured to guide an electronic device that launches the space sharing information to enter the joint virtual space.
Paragraph 3. The method according to paragraph 1 or 2, wherein the joint virtual space includes a first sub-virtual space and a second sub-virtual space, the first sub-virtual space corresponds to the first user account, and the second sub-virtual space corresponds to the second user account, and
   said displaying the joint virtual space on the preset page includes:
   displaying at least the first sub-virtual space on the preset page.
Paragraph 4. The method according to paragraph 3, wherein the space sharing information is configured to guide the electronic device that launches the space sharing information to display at least the first sub-virtual space on a preset page of the electronic device that launches the space sharing information.
Paragraph 5. The method according to any one of paragraphs 1 to 4, further including:
   displaying identity information of a third user on the preset page in response to second confirmation information for a joint operation between the first user account and a third user account or a joint operation between the second user account and the third user account,
   wherein the account controlling the joint virtual space further includes the third user account.
Paragraph 6. The method according to paragraph 5, further including:
   displaying identity information of a fourth user on the preset page in response to third confirmation information for a joint operation between the third user account and a fourth user account,
   wherein the account controlling the joint virtual space further includes the fourth user account.
Paragraph 7. The method according to any one of paragraphs 1 to 6, wherein said displaying the joint virtual space on the preset page in response to the first confirmation instruction for the joint operation between the first user account and the second user account includes:
   obtaining first permission information corresponding to the first user account and second permission information corresponding to the second user account in response to the first confirmation instruction for the joint operation between the first user account and the second user account; and
   displaying the joint virtual space on the preset page in response to that the first permission information and the second permission information satisfy preset permission information.
Paragraph 8. A method for operating a virtual space, performed by a viewer terminal corresponding to a viewer user account, including:
   displaying space sharing information, wherein the space sharing information is generated according to a first user account that shares the space sharing information;
   displaying a joint virtual space on a preset page in response to a display instruction, wherein the display instruction is based on the space sharing information, the joint virtual space is determined based on a first confirmation instruction for a joint operation between the first user account and a second user account, and an account controlling the joint virtual space includes the first user account and the second user account; and
   displaying, on the preset page, identity information of a first user, identity information of a second user and a viewer identity corresponding to the first user account, wherein the viewer identity is displayed due to entering the joint virtual space.
Paragraph 9. The method according to paragraph 8, wherein the joint virtual space includes a first sub-virtual space and a second sub-virtual space, the first sub-virtual space corresponds to the first user account, and the second sub-virtual space corresponds to the second user account, and
   said displaying the joint virtual space on the preset page includes:
   displaying at least the first sub-virtual space on the preset page.
Paragraph 10. The method according to paragraph 8 or 9, further including:
   determining recommendation information of a sub-virtual space in response to a space jumping instruction, wherein the recommendation information of the sub-virtual space includes first identity information of a to-be-recommended sub-virtual space;
   obtaining second identity information of a sub-virtual space currently displayed on the preset page; and
   displaying the to-be-recommended sub-virtual space on the preset page in response to that the first identity information and the second identity information are not matched.
Paragraph 11. The method according to paragraph 10, wherein said determining the recommendation information of the sub-virtual space in response to the space jumping instruction includes:
   triggering the space jumping instruction in response to detecting that a duration of displaying the sub-virtual space corresponding to the second identity information on the preset page reaches a preset duration; and
   determining the recommendation information of the sub-virtual space.
Paragraph 12. The method according to paragraph 10, wherein the preset page includes a space jumping control, and
   said determining the recommendation information of the sub-virtual space in response to the space jumping instruction includes:
   determining the recommendation information of the sub-virtual space in response to the space jumping instruction triggered based on the space jumping control.
Paragraph 13. The method according to any one of paragraphs 10 to 12, wherein said determining the recommendation information of the sub-virtual space includes:
   determining at least one of anchor output information and viewer interaction information of each sub-virtual space in the joint virtual space; and
   determining the recommendation information of the sub-virtual space according to the at least one of the anchor output information and the viewer interaction information.
Paragraph 14. The method according to paragraph 13, wherein determining the anchor output information of each sub-virtual space in the joint virtual space includes:
   determining language content output information and action content output information of each sub-virtual space in the joint virtual space;
   determining first time information corresponding to the language content output information;
   determining second time information corresponding to the action content output information; and
   determining the anchor output information of each sub-virtual space according to the language content output information, the action content output information, the first time information and the second time information.
Paragraph 15. The method according to paragraph 14, wherein the preset page includes a viewer interaction control, and the method further includes:
   displaying, in response to a viewer interaction instruction triggered based on the viewer interaction control, the viewer interaction information carried in the viewer interaction instruction on the preset page,
   wherein the viewer interaction information includes agreement information of output content, output information of virtual resource, comment information of output content, and anchor-being-followed information.
Paragraph 16. The method according to paragraph 15, wherein the output information of virtual resource includes directional output information of virtual resource and non-directional output information of virtual resource, and
   the anchor output information of each sub-virtual space is configured to indicate allocation information of the non-directional output information of virtual resource for an anchor user account corresponding to each sub-virtual space.
Paragraph 17. A device for operating a virtual space, which is applied to a first anchor terminal corresponding to a first user account, including:
   a space displaying module, configured to display a joint virtual space on a preset page in response to a first confirmation instruction for a joint operation between a first user account and a second user account, wherein an account controlling the joint virtual space includes the first user account and the second user account; and
   an identity information displaying module, configured to display identity information of a first user and identity information of a second user on the preset page,
   wherein the joint virtual space includes a viewer user account corresponding to the first user, a viewer user account corresponding to the second user, and an independent viewer user account.
Paragraph 18. The device according to paragraph 17, wherein the preset page includes a space sharing control for the virtual space, and the device further includes:
   a sharing information generating module, configured to in response to a space sharing instruction triggered based on the space sharing control, generate space sharing information according to the first user account,
   wherein the space sharing information is configured to guide an electronic device that launches the space sharing information to enter the joint virtual space.
Paragraph 19. The device according to paragraph 17, wherein the joint virtual space includes a first sub-virtual space and a second sub-virtual space, the first sub-virtual space corresponds to the first user account, and the second sub-virtual space corresponds to the second user account, and
   the space displaying module is configured to:
   display at least the first sub-virtual space on the preset page.
Paragraph 20. The device according to paragraph 19, wherein the space sharing information is configured to guide the electronic device that launches the space sharing information to display at least the first sub-virtual space on a preset page of the electronic device that launches the space sharing information.
Paragraph 21. The device according to paragraph 17, wherein the identity information displaying module is configured to:
   display identity information of a third user on the preset page in response to second confirmation information for a joint operation between the first user account and a third user account or a joint operation between the second user account and the third user account,
   wherein the account controlling the joint virtual space further includes the third user account.
Paragraph 22. The device according to paragraph 21, wherein the identity information displaying module is configured to:
   display identity information of a fourth user on the preset page in response to third confirmation information for a joint operation between the third user account and a fourth user account,
   wherein the account controlling the joint virtual space further includes the fourth user account.
Paragraph 23. The device according to paragraph 17, wherein the space displaying module is configured to:
   obtain first permission information corresponding to the first user account and second permission information corresponding to the second user account in response to the first confirmation instruction for the joint operation between the first user account and the second user account; and
   display the joint virtual space on the preset page in response to that the first permission information and the second permission information satisfy preset permission information.
Paragraph 24. A device for operating a virtual space, which is applied to a viewer terminal corresponding to a viewer user account, including:
   a sharing information displaying module, configured to display space sharing information, wherein the space sharing information is generated according to a first user account that shares the space sharing information;
   a space displaying module, configured to display a joint virtual space on a preset page in response to a display instruction, wherein the display instruction is based on the space sharing information, the joint virtual space is determined based on a first confirmation instruction for a joint operation between the first user account and a second user account, and an account controlling the joint virtual space includes the first user account and the second user account; and
   an identity information displaying module, configured to display, on the preset page, identity information of a first user, identity information of a second user and a viewer identity corresponding to the first user account, wherein the viewer identity is displayed due to entering the joint virtual space.
Paragraph 25. The device according to paragraph 24, wherein the joint virtual space includes a first sub-virtual space and a second sub-virtual space, the first sub-virtual space corresponds to the first user account, and the second sub-virtual space corresponds to the second user account, and
   the space displaying module is configured to:
   display at least the first sub-virtual space on the preset page.
Paragraph 26. The device according to paragraph 25, further including:
   a recommendation information determining module, configured to determine recommendation information of a sub-virtual space in response to a space jumping instruction, wherein the recommendation information of the sub-virtual space includes first identity information of a to-be-recommended sub-virtual space; and
   an identity information obtaining module, configured to obtain second identity information of a sub-virtual space currently displayed on the preset page,
   wherein the space displaying module is configured to display the to-be-recommended sub-virtual space on the preset page in response to that the first identity information and the second identity information are not matched.
Paragraph 27. The device according to paragraph 26, wherein the recommendation information determining module is configured to:
   trigger the space jumping instruction in response to detecting that a duration of displaying the sub-virtual space corresponding to the second identity information on the preset page reaches a preset duration; and
   determine the recommendation information of the sub-virtual space.
Paragraph 28. The device according to paragraph 26, wherein the preset page includes a space jumping control, and
   the recommendation information determining module is configured to:
   determine the recommendation information of the sub-virtual space in response to the space jumping instruction triggered based on the space jumping control.
Paragraph 29. The device according to any one of paragraphs 26 to 28, wherein the recommendation information determining module is configured to:
   determine at least one of anchor output information and viewer interaction information of each sub-virtual space in the joint virtual space; and
   determine the recommendation information of the sub-virtual space according to the at least one of the anchor output information and the viewer interaction information.
Paragraph 30. The device according to paragraph 29, wherein the recommendation information determining module is configured to:
   determine language content output information and action content output information of each sub-virtual space in the joint virtual space;
   determine first time information corresponding to the language content output information;
   determine second time information corresponding to the action content output information; and
   determine the anchor output information of each sub-virtual space according to the language content output information, the action content output information, the first time information and the second time information.
Paragraph 31. The device according to paragraph 30, wherein the preset page includes a viewer interaction control, and the device further includes an interaction information displaying module, configured to:
   display, in response to a viewer interaction instruction triggered based on the viewer interaction control, the viewer interaction information carried in the viewer interaction instruction on the preset page,
   wherein the viewer interaction information includes agreement information of output content, output information of virtual resource, comment information of output content, and anchor-being-followed information.
Paragraph 32. The device according to paragraph 31, wherein the output information of virtual resource includes directional output information of virtual resource and non-directional output information of virtual resource, and
   the anchor output information of each sub-virtual space is configured to indicate allocation information of the non-directional output information of virtual resource for an anchor user account corresponding to each sub-virtual space.
Paragraph 33. An electronic device, including:
   a processor; and
   a memory for storing instructions executable by the processor;
   wherein the processor is configured to execute the instructions to implement the method for operating the virtual space according to any one of paragraphs 1 to 7.
Paragraph 34. An electronic device, including:
   a processor; and
   a memory for storing instructions executable by the processor;
   wherein the processor is configured to execute the instructions to implement the method for operating the virtual space according to any one of paragraphs 8 to 16.
Paragraph 35. A computer-readable storage medium having instructions stored thereon that, when being executed by a processor of an electronic device, cause the electronic device to perform the method for operating the virtual space according to any one of paragraphs 1 to 7.
Paragraph 36. A computer-readable storage medium having instructions stored thereon that, when being executed by a processor of an electronic device, cause the electronic device to perform the method for operating the virtual space according to any one of paragraphs 8 to 16.
Paragraph 37. A computer program product including a computer program, wherein the computer program is stored in a readable storage medium, and at least one processor of a computer device reads and executes the computer program from the readable storage medium to cause the computer device to execute the method for operating the virtual space according to any one of paragraphs 1 to 7.
Paragraph 38. A computer program product including a computer program, wherein the computer program is stored in a readable storage medium, and at least one processor of a computer device reads and executes the computer program from the readable storage medium to cause the computer device to execute the method for operating the virtual space according to any one of paragraphs 8 to 16.

## Claims

1. A method for operating a virtual space, performed by a first anchor terminal corresponding to a first user account, comprising:
displaying (S201) a joint virtual space on a preset page in response to a first confirmation instruction for a joint operation between the first user account and a second user account, wherein an account controlling the joint virtual space comprises the first user account and the second user account; and
displaying (S203) identity information of a first user and identity information of a second user on the preset page,
wherein the joint virtual space comprises a viewer user account corresponding to the first user, a viewer user account corresponding to the second user, and an independent viewer user account.

2. The method according to claim 1, wherein the preset page comprises a space sharing control for the virtual space, and the method further comprises:
in response to a space sharing instruction triggered based on the space sharing control, generating space sharing information according to the first user account,
wherein the space sharing information is configured to guide an electronic device that launches the space sharing information to enter the joint virtual space.

3. The method according to claim 1 or 2, wherein the joint virtual space comprises a first sub-virtual space and a second sub-virtual space, the first sub-virtual space corresponds to the first user account, and the second sub-virtual space corresponds to the second user account, and
said displaying (S201) the joint virtual space on the preset page comprises:
displaying at least the first sub-virtual space on the preset page.

4. The method according to claim 3, wherein the space sharing information is configured to guide the electronic device that launches the space sharing information to display at least the first sub-virtual space on a preset page of the electronic device that launches the space sharing information.

5. The method according to any one of claims 1 to 4, further comprising:
displaying identity information of a third user on the preset page in response to second confirmation information for a joint operation between the first user account and a third user account or a joint operation between the second user account and the third user account,
wherein the account controlling the joint virtual space further comprises the third user account.

6. The method according to claim 5, further comprising:
displaying identity information of a fourth user on the preset page in response to third confirmation information for a joint operation between the third user account and a fourth user account,
wherein the account controlling the joint virtual space further comprises the fourth user account.

7. The method according to any one of claims 1 to 6, wherein said displaying (S201) the joint virtual space on the preset page in response to the first confirmation instruction for the joint operation between the first user account and the second user account comprises:
obtaining first permission information corresponding to the first user account and second permission information corresponding to the second user account in response to the first confirmation instruction for the joint operation between the first user account and the second user account; and
displaying the joint virtual space on the preset page in response to that the first permission information and the second permission information satisfy preset permission information.

8. A method for operating a virtual space, performed by a viewer terminal corresponding to a viewer user account, comprising:
displaying (S1001) space sharing information, wherein the space sharing information is generated according to a first user account that shares the space sharing information;
displaying (S1003) a joint virtual space on a preset page in response to a display instruction, wherein the display instruction is based on the space sharing information, the joint virtual space is determined based on a first confirmation instruction for a joint operation between the first user account and a second user account, and an account controlling the joint virtual space comprises the first user account and the second user account; and
displaying (S1005), on the preset page, identity information of a first user, identity information of a second user and a viewer identity corresponding to the first user account, wherein the viewer identity is displayed due to entering the joint virtual space.

9. The method according to claim 8, wherein the joint virtual space comprises a first sub-virtual space and a second sub-virtual space, the first sub-virtual space corresponds to the first user account, and the second sub-virtual space corresponds to the second user account, and
said displaying (S1003) the joint virtual space on the preset page comprises:
displaying at least the first sub-virtual space on the preset page.

10. The method according to claim 8 or 9, further comprising:
determining recommendation information of a sub-virtual space in response to a space jumping instruction, wherein the recommendation information of the sub-virtual space comprises first identity information of a to-be-recommended sub-virtual space;
obtaining second identity information of a sub-virtual space currently displayed on the preset page; and
displaying the to-be-recommended sub-virtual space on the preset page in response to that the first identity information and the second identity information are not matched.

11. The method according to claim 10, wherein said determining the recommendation information of the sub-virtual space in response to the space jumping instruction comprises:
triggering the space jumping instruction in response to detecting that a duration of displaying the sub-virtual space corresponding to the second identity information on the preset page reaches a preset duration; and
determining the recommendation information of the sub-virtual space.

12. The method according to claim 10, wherein the preset page comprises a space jumping control, and
said determining the recommendation information of the sub-virtual space in response to the space jumping instruction comprises:
determining the recommendation information of the sub-virtual space in response to the space jumping instruction triggered based on the space jumping control.

13. The method according to any one of claims 10 to 12, wherein said determining the recommendation information of the sub-virtual space comprises:
determining at least one of anchor output information and viewer interaction information of each sub-virtual space in the joint virtual space; and
determining the recommendation information of the sub-virtual space according to the at least one of the anchor output information and the viewer interaction information,
preferably,
determining the anchor output information of each sub-virtual space in the joint virtual space comprises:
determining language content output information and action content output information of each sub-virtual space in the joint virtual space;
determining first time information corresponding to the language content output information;
determining second time information corresponding to the action content output information; and
determining the anchor output information of each sub-virtual space according to the language content output information, the action content output information, the first time information and the second time information.

14. The method according to claim 13, wherein the preset page comprises a viewer interaction control, and the method further comprises:
displaying, in response to a viewer interaction instruction triggered based on the viewer interaction control, the viewer interaction information carried in the viewer interaction instruction on the preset page,
wherein the viewer interaction information comprises agreement information of output content, output information of virtual resource, comment information of output content, and anchor-being-followed information,
preferably,
the output information of virtual resource comprises directional output information of virtual resource and non-directional output information of virtual resource, and
the anchor output information of each sub-virtual space is configured to indicate allocation information of the non-directional output information of virtual resource for an anchor user account corresponding to each sub-virtual space.

15. An electronic device, configured to perform the method according to any one of claims 1 to 7 or the method according to any one of claims 8 to 14.
